# EUROPÄISCHE PATENTSCHRIFT

(11) **EP 0 928 630 B1**
(45) Veröffentlichungstag und Bekanntmachung des Hinweises auf die Patenterteilung: **12.10.2005**
(21) Anmeldenummer: 99100145.4
(22) Anmeldetag: 08.01.1999
(51) Int. Cl.: B01D 53/86, B01J 23/755, B01J 23/78, C10K 1/34

(54) **Katalysator und Verfahren zur katalytischen Zersetzung von Ammoniak und Cyanwasserstoff aus Kokereiabgasen**
Catalyst and process for the catalytic decomposition of ammonia and hydrogen cyanide in a coke oven exhaust gas
Catalyseur et procédé pour la décomposition de l'ammoniaque et du cyanure d'hydrogène contenus dans un gaz de cokerie

(30) Priorität: 08.01.1998 DE 19800449
(43) Veröffentlichungstag der Anmeldung: 14.07.1999
(73) Patentinhaber: BASF Aktiengesellschaft, 67056 Ludwigshafen (DE)
(72) Erfinder: Schäfer, Harald, 67117 Limburgerhof (DE); Matthias, Günther, Dr., 67227 Frankenthal (DE)
(74) Vertreter: Isenbruck, Günter

(56) Entgegenhaltungen:
- EP-A- 0 276 044
- DE-A- 3 209 858
- DE-A- 4 116 362
- GB-A- 1 353 751
- JP-A- 53 005 065
- US-A- 3 645 915
- US-A- 3 824 196
- US-A- 3 883 444
- DATABASE WPI Week 9036 Derwent Publications Ltd., London, GB; AN 90280150 XP002100193 & JP 02 198638 A (NIPPON KOKAN KK)

## Beschreibung

Die Erfindung betrifft einen geträgerten edelmetallfreien Metalloxidkatalysator, der in einem Verfahren zur einstufigen katalytischen Zersetzung von Ammoniak und Cyanwasserstoff aus Kokereiabgasen, vor der Einleitung in eine Claus-Entschwefelungsanlage, eingesetzt wird.

Kokereiabgase enthalten neben Ammoniak, Kohlenwasserstoffen, Kohlenmonoxid, Kohlendioxid und Cyanwasserstoff auch Schwefelverbindungen. Das Kokereiabgas kann z. B. zur Schwefelgewinnung in eine Claus-Anlage geleitet werden. Dabei kann der in dem Kokereiabgas enthaltene Schwefelwasserstoff in Gegenwart von Sauerstoff und einem Katalysator wie Bauxit verbrannt und in Schwefeldioxd überführt werden. Die Verbrennungsgase werden anschließend in der Regel gekühlt und nach Auskondensieren des bei der Reaktion entstandenen Wassers zu elementarem Schwefel aufgearbeitet. Wenn aus dem Kokereiabgas, vor dem Einleiten in die Claus-Anlage, Ammoniak und Cyanwasserstoff nicht entfernt werden, dann können sich bei Abkühlung der Verbrennungsgase jedoch Ammoniumsulfid, Ammoniumcarbonat und Cyanide in den Rohren der Wärmetauscher der Claus-Anlage abscheiden. Dadurch wird oftmals der Wirkungsgrad der Anlage verschlechtert, und so ein Abschalten zu Reinigungszwecken erforderlich.

Die Spaltung von Ammoniak verläuft als Umkehrung der Synthesereaktion aus den Elementen. Mit steigender Temperatur und unter Normaldruck liegt das Gleichgewicht auf der Seite von N₂ und H₂, während die Ammoniaksynthese bei hohem Druck und einer Temperatur um die 400°C durchgeführt wird. Zur Reaktionsbeschleunigung werden für die Spaltungsreaktion und die Synthesereaktion jeweils geeignete Katalysatoren eingesetzt.

Einige Verfahren zur katalytischen Zersetzung von Ammoniak oder Cyanwasserstoff aus Abgasen unter Verwendung von Metalloxidkatalysatoren sind beschrieben worden.

Die FR-A 2 110 987 beschreibt beispielsweise eine zweistufige Ammoniak-Spaltung bei einem Druck zwischen 50 und 304 bar. Der erste Schritt der Reaktion erfolgt bei einer Temperatur zwischen 450 und 600°C an einem Katalysator aus einer Keramik (Al₂O₃, MgO mit K₂O aktiviert), die 8% Nickel enthält und bei einem Druck von 140 bar. Nach diesem Schritt enthält das Gas noch 33% Ammoniak (NH₃). Im zweiten Schritt findet die Reaktion unter vergleichbaren Bedingungen statt, aber an einem Katalysator aus aktiviertem α-Eisen mit Al₂O₃, CaO und K₂O. Das Gas enthält anschließend noch 6,8% NH₃.

Die JP-A 53 005 065 beschreibt die Spaltung von Cyanwasserstoff (HCN) aus Abfallgas. Das Gas wird in einem ersten Schritt über einen Metalloxidkatalysator, der Al, Ce, Ti, Zr, Mg, Ba, Ca, Na, K, Mo, V, Fe, Cu, Co, Ni, Mn, Ag und La enthalten kann, geleitet und HCN in Anwesenheit von Sauerstoff zu NH₃ und CO zersetzt. In einem zweiten Schritt wird dem Gas unter Umständen zusätzlich Sauerstoff zugeführt und CO zu CO₂ und NH₃ zu N₂ oxidiert. Der für den zweiten Schritt eingesetzte Katalysator enthält Edelmetalle wie Pt, Pd, Ag oder Rh und als Basismetall ein Metall, das aus der Gruppe Mo, V, Fe, Cu, Co, Ni, Mn und W ausgewählt ist oder einen Komplex aus mehreren Metallen dieser Gruppe. Die zweistufige Spaltungsreaktion erfolgt zwischen 100 und 600°C, und der HCN-Gehalt von mehr als 1000 ppm wird auf weniger als 1 ppm reduziert.

In der DE-A 32 09 858 wird ein Verfahren beschrieben, in dem Kokereiabgas zunächst einer Wasserwäsche unterworfen wird und das erhaltene Gasgemisch neben Ammoniak und Schwefelwasserstoff, noch Cyanwasserstoff und Kohlenwasserstoffe enthält. Diesem Gasgemisch werden Brenngas und Luft zugemischt und bei einer Temperatur zwischen 1000 und 1200 °C über einen Nickeloxidkatalysator geleitet. Ammoniak wird zu Stickstoff und Wasserstoff zersetzt, während der Schwefelwasserstoff erhalten bleibt und zur Schwefelgewinnung in eine Claus-Entschwefelungsanlage weitergeleitet werden kann.

Bei sehr hohem Schwefelgehalt des Kokereiabgasgemisches kann es bei geträgerten Metalloxidkatalysatoren, die neben dem Trägermaterial nur NiO enthalten, zu einer Verminderung der Katalysatoraktivität kommen. Eine Temperaturerhöhung kann eine erhöhte Flüchtigkeit des NiO bewirken. Diese Effekte können die Lebensdauer und Wirksamkeit des Katalysators erheblich vermindern.

Aufgabe der Erfindung ist es, einen geträgerten edelmetallfreien Metalloxidkatalysator bereitzustellen, der in einem Verfahren zur einstufigen katalytischen Zersetzung von Ammoniak und Cyanwasserstoff aus Kokereiabgasen, vor der Einleitung in eine Claus-Entschwefelungsanlage, eingesetzt werden soll. Dieser Metalloxidkatalysator soll eine erhöhte Aktivität und Stabilität gegenüber den bisher in diesen Verfahren eingesetzten Metalloxidkatalysatoren aufweisen.

Die Aufgabe wird gelöst durch einen geträgerten edelmetall freien Metalloxidkatalysator mit einem Gehalt an Nickeloxid zur Zersetzung von Ammoniak und Cyanwasserstoff aus Kokereiabgasen. Der Metalloxidkatalysator ist dadurch gekennzeichnet, daß er, bezogen auf den Gesamtkatalysator, 2 bis 5,5 Gew.%, bevorzugt 3,5 bis 4,5 Gew.% Nickeloxid (NiO), und 0,5 bis 3,5 Gew.%, bevorzugt 1,5 bis 2,5 Gew.% Kobaltoxid (CoO) auf einem Magnesiumoxid-Träger enthält. Zusätzlich enthält der Katalysator vorzugsweise 1 bis 5 Gew.% Eisenoxide. Magnesiumoxid ist zu einem Anteil von etwa 82 bis 97,5 Gew.% in dem Katalysator enthalten.

Der erfindungsgemäße Metalloxidkatalysator wird insbesondere wie folgt hergestellt:
Der Magnesiumoxid-Träger wird aus Magnesit, einem Mineral, das hauptsächlich aus Magnesiumcarbonat besteht, hergestellt. Als Verunreinigungen können im Magnesit 4 bis 5 Gew.% SiO₂, 1 bis 3 Gew.% CaO, 1 bis 2 Gew.% Fe₂O₃ und 1 bis 2 Gew.% Al₂O₃ vorhanden sein. Diese Verunreinigungen haben aber keinen negativen Einfluß auf die Katalysatoraktivität. Das Mineral wird bei ca. 1400°C gebrannt. Dabei entweicht CO₂ und MgO bleibt zurück. Das erhaltene MgO bildet sehr feste, temperaturstabile Körper.

Der MgO-Träger liegt vorzugsweise in Form von Kugeln vor. Die Kugeln haben, zur Erzielung eines niedrigen Druckverlustes, bevorzugt einen Durchmesser von 14 bis 20 mm, besonders bevorzugt 17 bis 18 mm. Auf den MgO-Träger werden thermisch leicht zersetzliche Verbindungen des Nickels oder Kobalts aufgebracht, vorzugsweise durch Tränken des Trägers mit einer Nitrat-, Carbonat- oder Oxalatlösung des entsprechenden Metalls, besonders bevorzugt mit einer Metallnitratlösung. Dazu werden beispielsweise 1 bis 20g metallisches Kobalt oder Nickel in konzentrierter Salpetersäure bei 20-80°C gelöst und zu Co(NO₃)₂ bzw. Ni(NO₃)₂ umgesetzt. Die salpetersauren Metallnitratlösungen werden in einem Verhältnis miteinander gemischt, in dem die Metalloxide anschließend im Katalysator vorliegen sollen. Die MgO-Kugeln werden bei 20 bis 30°C für eine Stunde mit der Metallnitratlösung getränkt. Die Lösung wandert in die Hohlräume des MgO-Trägers, der eine Porosität von 0,1 bis 0,14 ml/g aufweist. Nach dem Tränken läßt man überschüssige, an dem Träger haftende Flüssigkeit vorzugsweise abtropfen. Der auf diese Weise behandelte MgO-Träger wird anschließend kalziniert. Hierfür werden die getränkten MgO-Kugeln zunächst für 30 bis 60 Minuten, vorzugsweise 35 bis 40 Minuten einer Temperatur zwischen 300 und 400°C und anschließend für die gleiche Dauer einer Temperatur zwischen 600 und 700°C, vorzugsweise zwischen 640 und 660°C, insbesondere etwa 650°C ausgesetzt.

Tränken und Kalzinieren der MgO-Kugeln werden mehrmals hintereinander durchgeführt, vorzugsweise drei- bis viermal hintereinander, um den gewünschten Metalloxidgehalt für den Katalysator zu erreichen.

Nach dem Kalzinieren verringert sich die Porosität des MgO-Trägers auf 0,1 bis 0,05 ml/g, vorzugsweise auf 0,06 ml/g aufgrund der in die Hohlräume des Trägers eingelagerten CoO und NiO Moleküle.

Der Katalysator enthält anschließend einen Metalloxidgehalt - ohne Träger - von insgesamt 5,5 bis 7,8 Gew.%, bevorzugt 5,7 bis 7,6 Gew.%, besonders bevorzugt 6,0 bis 7,0 Gew.%. Insbesondere soll der Metalloxidgehalt 6,5 Gew.% betragen.
Das Verhältnis von NiO zu CoO beträgt vorzugsweise 66,7 Gew.% zu 33,3 Gew.%. Es sind Abweichungen zugelassen, wie 80 Gew.% NiO und 20 Gew.% CoO sowie 55 Gew.% NiO zu 45 Gew.% CoO.
Bezogen auf den gesamten Katalysator beträgt der Gehalt an Nickeloxid vorzugsweise 3,5 bis 5,0 Gew.%, besonders bevorzugt 3,7 bis 5 Gew.% und der Gehalt an CoO 1,5 bis 2,5 Gew.%, besonders bevorzugt 1,8 bis 2,5 Gew.%.

Edellmetallfreie geträgerte Metalloxidkatalysatoren, die neben dem Trägermaterial ausschließlich NiO enthalten, können, wie beschrieben, bei höherem Schwefelgehalt vergiftet werden. Dieser Nachteil kann dadurch vermieden werden, indem das Nickeloxid zum Teil durch Kobaltoxid ersetzt wird. Kobaltoxid ist bei höheren Temperaturen auch weniger flüchtig als Nickeloxid, so daß sich durch Verwenden von CoO die Lebensdauer und Aktivität des Katalysators erhöhen läßt. Die Langzeitstabilität des Katalysators ist außerdem durch den temperaturstabilen MgO-Träger gegeben.

Der erfindungsgemäße edelmetallfreie Metalloxidkatalysator liegt vorzugsweise in Form von Kugeln vor. Der Katalysator kann aber auch andere Formen haben, wie Würfel-, Waben-, Sternstrang- oder Zylinderform. Das Schüttgewicht liegt bei etwa 1,3 bis 1,6 kg/l vorzugsweise bei 1,4 bis 1,5 kg/l, die innere Oberfläche beträgt unter 5 m²/g, bevorzugt unter 2 m²/g und das Porenvolumen unter 0,3 ml/g, bevorzugt 0,05 bis 0,15 ml/g.

Der erfindungsgemäße Metalloxidkatalysator kann in einem Verfahren zur einstufigen katalytischen Zersetzung von Ammoniak und Cyanwasserstoff aus Kokereiabgasen vor der Einleitung in eine Claus-Entschwefelungsanlage eingesetzt werden.

Für die einstufige katalytische Ammoniak- und Cyanwasserstoff-Zersetzung wird das Kokereiabgas zunächst einer Wasserwäsche unterworfen. Anschließend wird das aus der Wäsche gestrippte Abgas mit Luft versetzt und über einen Brenner, mit einem Volumenstrom von 500 bis 1000 m³/h und m³ Katalysatorvolumen bei einer Reaktionstemperatur zwischen bevorzugt 1000 und 1400°C, besonders bevorzugt 1100°C und einem Reaktionsdruck zwischen 1 und 3 bar über den Metalloxidkatalysator geleitet, der sich in einem ausgemauerten Schachtofen befindet.
Die Zusammensetzung des Gases kann in Abhängigkeit der verwendeten Kohle oder der Vergasungs- und Waschbedingungen schwanken. Allgemein liegen NH₃ zu einem Anteil von 0,1 bis 20 Vol. %, H₂S und andere Schwefelverbindungen zu 1 bis 20 Vol. % und HCN zu <100 ppm bis 1 Vol. % in dem Gemisch vor.

Die Erfindung wird nachstehend noch näher erläutert.

### Beispiele

Kokereiabgas wurde einer Wasserwäsche unterworfen. Der Ammoniakgehalt in der wässrigen Phase wurde mit Ionenaustauschchromatographie, und der Cyanwasserstoffgehalt photometrisch nach DIN 38405 bestimmt. Die Zusammensetzung des gereinigten Gasgemisches wurde gaschromatographisch bestimmt.

Die Zusammensetzung von zwei Gasgemischen sind als Beispiel 1 und 2 in der folgenden Tabelle 1 dargestellt

| Gaszusammensetzung [Vol.%] | Beispiel 1 | Beispiel 2 |
|---|---|---|
| H₂ | 4,3 | 0,17 |
| N₂(Rest zu 100%) | 42 | 47,5 |
| Ar | 0,4 | 0,5 |
| O₂ | 0,35 | 0,8 |
| CO | 1,2 | 0,4 |
| CO₂ | 7,3 | 6,1 |
| H₂S | 3,9 | 7,1 |
| COS | 0,1 | <0,1 |
| SO₂ | 0,4 | <0,1 |
| CS₂ | 0,06 | <0,1 |
| S | 0,7 | 0,8 |
| H₂O | 39 | 23 |
| NH₃ | 0,6 | 14 |
| HCN | 0,01 | 0,01 |
| NO | | 0,16 |

### Beispiel 1

Das gereinigte Gasgemisch wurde bei einer Temperatur von 1100°C, einem Druck von 1,24 bar und einem Volumenstrom von 640 m³/h und m³ Katalysatorvolumen in einem Zersetzungsofen mit dem erfindungsgemäßen Metalloxidkatalysator in Kontakt gebracht. Der verwendete Katalysator enthielt 4 Gew.% NiO und 2 Gew.% CoO auf einem MgO-Träger. Die Schütthöhe des Katalysators betrug 2000 mm. Oberhalb und unterhalb des Katalysators waren Inertkugeln mit einem Durchmesser von 50 mm und in einer Schichtdicke von 200 bzw. 250 mm angeordnet.

Am Reaktorausgang hatte das Gasgemisch einen NH₃-Gehalt von weniger 0,005 Vol% und einen HCN-Gehalt von weniger 0,001 Vol%. Über 99% des Ammoniakgehalts des Gases sind entfernt worden. Die Gasanalyse erfolgte gaschromatographisch.

### Beispiel 2

Das gereinigte Gasgemisch wurde bei einer Temperatur von 1100°C, einem Druck von 1,65 bar und einem Volumenstrom von 770 m³/h und m³ Katalysatorvolumen in einem Zersetzungsofen mit dem erfindungsgemäßen Metalloxidkatalysator in Kontakt gebracht. Der verwendete Katalysator enthielt 4 Gew.% NiO und 2 Gew.% CoO auf einem MgO-Träger. Die Schütthöhe des Katalysators betrug 2150 mm. Oberhalb und unterhalb des Katalysators waren Inertkugeln mit einem Durchmesser von 50 mm und in einer Schichtdicke von 300 bzw. 200 mm angeordnet.

Das Gasgemisch der Zusammensetzung aus Beispiel 2 hatte nach der Reaktion einen NH₃-Gehalt von weniger 0,005 Vol% und einen HCN-Gehalt von weniger 0,001 Vol%. Die Zusammensetzung des Gasgemisches wurde am Reaktorausgang gemessen. Die Gasanalyse erfolgte gaschromatographisch.

Die von Ammoniak und Cyanwasserstoff befreiten Gase wurden anschließend zur Schwefelgewinnung in eine Claus-Anlage geleitet. Die Rohre der dem Verbrennungsofen der Anlage nachgeschalteten Wärmetauscher wiesen keine Beläge von Ammoniumsulfid, Ammoniumcarbonat oder Cyanid auf.

## Patentansprüche

1. Geträgerter edelmetallfreier Metalloxidkatalysator mit einem Gehalt an Nickeloxid zur Zersetzung von Ammoniak und Cyanwasserstoff aus schwefelhaltigen Kokereiabgasen, **dadurch gekennzeichnet, daß** der Metalloxidkatalysator, bezogen auf den Gesamtkatalysator, 2 bis 5,5 Gew.% NiO und 0,5 bis 3,5 Gew.% CoO auf einem MgO-Träger enthält, wobei der Anteil von MgO in Katalysator 82 bis 97,5 Gew.-% beträgt.

2. Katalysator nach Anspruch 1, **dadurch gekennzeichnet, daß** dieser 3,5 bis 4,5 Gew.% NiO und 1,5 bis 2,5 Gew.% CoO enthält.

3. Katalysator nach Anspruch 1 oder 2, **dadurch gekennzeichnet, daß** er zusätzlich 1 bis 5 Gew.% Eisenoxide enthält.

4. Katalysator nach einem der Ansprüche 1 bis 3, **dadurch gekennzeichnet, daß** der MgO-Träger aus Kugeln mit einem Durchmesser von 14 bis 20 mm besteht.

5. Verfahren zur einstufigen katalytischen Zersetzung von Ammoniak und Cyanwasserstoff aus Kokereiabgas vor der Einleitung in eine Claus-Entschwefelungsanlage, wobei das Kokereiabgas über einen geträgerten edelmetallfreien Metalloxidkatalysator gemäß einem der Ansprüche 1 bis 4, geleitet wird.

6. Verfahren nach Anspruch 5, **dadurch gekennzeichnet, daß** die Reaktionstemperatur für die katalytische Ammoniak- und Cyanwasserstoff-Zersetzung zwischen 1000 und 1400°C liegt.

7. Verfahren nach Anspruch 6, **dadurch gekennzeichnet, daß** der Reaktionsdruck für die katalytische Ammoniak- und Cyanwasserstoff-Zersetzung zwischen 1 und 3 bar liegt.

## Claims

1. A supported metal oxide catalyst which is free of noble metals and comprises, based on the total catalyst, from 2 to 5.5% by weight of NiO and from 0.5 to 3.5% by weight of CoO on an MgO support for the decomposition of ammonia and hydrogen cyanide in sulfur-containing coke-oven gas, the proportion of MgO in the catalyst being from 82 to 97.5% by weight.

2. The catalyst according to claim 1 comprising from 3.5 to 4.5 % by weight of NiO and from 1.5 to 2.5 % by weight of CoO.

3. The catalyst according to claim 1 or 2 which additionally comprises from 1 to 5 % by weight of iron oxides.

4. The catalyst according to any of claims 1 to 3, wherein the MgO support consists of spheres having a diameter of from 14 to 20 mm.

5. A process for the single-stage catalytic decomposition of ammonia and hydrogen cyanide in coke-oven gas before the latter is fed to a Claus desulfurization plant, which comprises passing the coke-oven gas over a supported metal oxide catalyst which is free of noble metals and is according to any of claims 1 to 4.

6. The process according to claim 5, wherein the reaction temperature for the catalytic decomposition of ammonia and hydrogen cyanide is from 1000 to 1400°C.

7. The process according to claim 6, wherein the reaction pressure for the catalytic decomposition of ammonia and hydrogen cyanide is from 1 to 3 bar.

## Revendications

1. Catalyseur d'oxyde métallique sur support exempt de métaux nobles et contenant de l'oxyde de nickel, pour la décomposition d'ammoniac et de cyanure d'hydrogène contenus dans des gaz de cokerie contenant du soufre, **caractérisé en ce que** le catalyseur d'oxyde métallique contient, par rapport à l'ensemble du système catalytique, de 2 à 5,5% en poids de NiO et de 0,5 à 3,5% en poids de CoO sur un support de MgO, la fraction de MgO dans le catalyseur étant de 82 à 97,5% en poids.

2. Catalyseur selon la revendication 1, **caractérisé en ce qu'**il contient de 3,5 à 4,5% en poids de NiO et de 1,5 à 2,5% en poids de CoO.

3. Catalyseur selon la revendication 1 ou 2,
**caractérisé en ce qu'**il contient en outre de 1 à 5% en poids d'oxydes de fer.

4. Catalyseur selon l'une quelconque des revendications 1 à 3, **caractérisé en ce que** le support de MgO consiste en billes d'un diamètre de 14 à 20 mm.

5. Procédé de décomposition catalytique en une étape d'ammoniac et de cyanure d'hydrogène contenus dans un gaz de cokerie, avant l'introduction dans une installation de désulfuration de type Claus, dans lequel le gaz de cokerie est guidé sur un catalyseur d'oxyde métallique sur support exempt de métaux nobles selon l'une quelconque des revendications 1 à 4.

6. Procédé selon la revendication 5, **caractérisé en ce que** la température de réaction pour la décomposition catalytique d'ammoniac et de cyanure d'hydrogène est de 1000 à 1400°C.

7. Procédé selon la revendication 6, **caractérisé en ce que** la pression de réaction pour la décomposition catalytique d'ammoniac et de cyanure d'hydrogène est de 1 à 3 bar.
